# EUROPEAN PATENT SPECIFICATION

(11) **EP 3 033 711 B1**
(45) Date of publication and mention of the grant of the patent: **31.10.2018**
(21) Application number: 15818818.5
(22) Date of filing: 07.07.2015
(51) Int. Cl.: G06Q 20/36, G06K 19/06, G06Q 20/38, G06Q 20/32

(54) **SYSTEM AND METHOD FOR A BASEBAND NEARFIELD MAGNETIC STRIPE DATA TRANSMITTER**
SYSTEM UND VERFAHREN FÜR EINEN BASISBAND-NAHFELDMAGNETSTREIFEN-DATENSENDER
SYSTÈME ET PROCÉDÉ POUR UN ÉMETTEUR DE DONNÉES DE BANDE MAGNÉTIQUE DE CHAMP PROCHE EN BANDE DE BASE

(30) Priority: 11.07.2014 US 201414329130
(43) Date of publication of application: 22.06.2016
(60) Divisional application: 16200980.7
(73) Proprietor: Samsung Electronics Co., Ltd., Suwon-si, Gyeonggi-do (KR)
(72) Inventor: WALLNER, George, Miami Beach, Florida 33139 (US)
(74) Representative: HGF Limited
(86) International application number: PCT/US2015/039327
(87) International publication number: WO 2016/007475

(56) References cited:
- US-A- 4 798 322
- US-A1- 2006 186 209
- US-A1- 2006 249 574
- US-A1- 2012 074 232
- US-B1- 8 376 239
- US-B1- 8 523 059
- US-B1- 8 628 012
- US-B2- 7 641 124

## Description

### CROSS REFERENCE TO RELATED APPLICATION DATA

This application claims priority to U.S. Application No. 14/329, 130, filed on July 11, 2014 and published as US 2015/0235204, which is a continuation-in-part of U.S. Application No. 14/181,947, filed on February 17, 2014 and published as US 2014/0269946, which is a continuation-in-part of U.S. Application No. 13/826, 101, filed on March 14, 2013 and published as US 8,690,059, which claims priority from U.S. Provisional Application No. 61/754,608, filed on January 20, 2013.

### FIELD OF THE INVENTION

The present invention relates to a baseband nearfield magnetic stripe data transmitter and an associated apparatus and system, and in particular to a magnetic stripe data transmitter that transmits payment card data from a smartphone, or other electronic device, into a Point of Sale transaction terminal by pressing a payment button on the smartphone or on the magnetic stripe data transmitter.

### BACKGROUND OF THE INVENTION

Magnetic stripe payment cards carry a magnetic stripe that contains the payment card data. Magnetic stripe payment cards include credit, debit, gift, and coupon cards, among others. The data is "written" onto the magnetic stripe by alternating the orientation of the magnetic particles embedded into the stripe. Card data is read from the magnetic stripe at a Point of Sale (POS) by swiping the card through a magnetic stripe reader. The reader includes of a reader head and its associated decoding circuitry. When the card is swiped through the reader the magnetic stripe moves in front of the reader head. The moving magnetic stripe, which contains the alternating polarity magnetic domains, creates a fluctuating magnetic field within the narrow sensing aperture of the reader head. The reader head converts this fluctuating magnetic field into an equivalent electrical signal. The decoding circuitry amplifies and digitizes this electrical signal, recreating the same data stream that was originally written onto the magnetic stripe. The encoding of the magnetic stripe is described in the international standard ISO 781 1 and 7813.

With the increased popularity and capability of smartphones, there is a growing desire to use them as mobile wallets and to use them to make payments at the point of sale. The key impediment to adoption has been the lack of data transfer channel between mobile phones and the point of sale terminal. A number of alternatives have been proposed. These include the manual keying of data displayed on the phone's screen into POS terminal, 2D barcodes displayed on the phone's screen and read by a 2D barcode reader, RF ID tags attached to phones and built-in Near Field Communications (NFC) hardware driven by an application in the phone. Of these methods, 2D barcodes and NFC are the most promising. Their wide scale adoption, however, is prevented by a lack of suitable reading devices at the point of sale, and in the case of NFC, also the lack of standardized NFC capability in many smartphones.

Accordingly, there is a need for improved devices and methods for transmitting payment card data, or other information, from a smartphone, or other electronic device, remotely into a Point of Sale transaction terminal.

In US 2012/074232, there is disclosed a universal card that can be used in place of all the other traditional cards which a person may want to carry. The universal card can include a short range communications transceiver to communicate with a mobile device. The mobile device can include a user interface and an e-wallet application so that the user can interface with the e-wallet application for programming the universal card via the short range communication link. Once programmed, the universal card emulates a function of a traditional card. A dynamic magnetic stripe emulates a traditional magnetic stripe, wherein individually inducible transducer coils positioned within a universal card are used to emulate the static magnets in a traditional magnetic stripe.

In US 2006/186209, there is disclosed an electronic transaction card that communicates with an add-on slot of an intelligent electronic device. The add-on slot may be a memory card slot. The intelligent electronic device may be a mobile phone or other device with or without network connectivity. The electronic transaction card may have magnetic field producing circuitry compatible with magnetic card readers, smartcard circuitry, other point-of-sale interfaces, or any combination thereof.

In US 8,376,239, there is disclosed a method of reading magnetic stripe card(s) into a database, selecting a specific card from the database, and outputting the data related to that specific card to existing merchant card reader equipment with no modification. A simulated magnetic stripe card can be tethered to a cell phone via the headset jacks. A more complex design uses an un-tethered, simulated magnetic stripe card by including BLUETOOTH (or other wireless) communications on the card. This dual purpose invention is intended to eliminate the need to carry multiple magnetic stripe cards in a wallet or purse by consolidating all of the individual card information into a form to be reproduced onto the simulation card when needed by the user. It can also be used at a merchant POS card reader to allow an existing MSD reader to be converted to use in wireless cell phone transactions e.g. BLUETOOTH or NFC.

In US 8,628,012, there is disclosed a system and a method for a baseband near-field magnetic stripe data transmitter (MST) device that transmits payment card data from a smart-phone, or other electronic device, into a Point of Sale (POS) transaction terminal. The MST device includes a driver and an inductor. The MST receives magnetic stripe data comprising payment card data, processes the received magnetic stripe data and emits high energy magnetic pulses comprising the processed magnetic stripe data that are then received remotely by the magnetic stripe reader of the POS.

In US 8,523,059, there are disclosed advanced payment applications to improve the functionality of cards and devices. For example, a user interface may be placed on a card (e.g., a physical button) or a telephonic device (e.g., a virtual button on a capacitive touch screen). Manual input provided to this user interface may, for example, cause an item purchased on credit to be paid via one or more user accounts (e.g., bank accounts) as soon as the next credit statement posts or becomes due. A user may decide to pay for an item when the next statement becomes due at a point-of-sale magnetic stripe reader by using an interface on a card to cause information to be communicated through the infrastructure indicative of a user's desire to pay the for an item when the next statement becomes due.

In US 4,798,322, there is disclosed a personal memory card system arranged for use with a memory card which looks and feels much like an ordinary credit card. No ohmic electrical contact is required between the card and a reader/writer in an associated station for transferring data to and from the card and operating power to the card. The need for conductive contacts in transferring data between the reader/writer and the card is avoided through use of a capacitive interface formed when insulated metallic plates on the card are aligned in close proximity with corresponding plates on the reader/writer. The personal memory card system is also arranged to permit an authorized user to selectively reprogram a memory card with new and different data as desired.

### SUMMARY OF THE INVENTION

The present disclosure describes a system and a method for a baseband near-field magnetic stripe data transmitter that transmits payment card data, or other information, from a smartphone, or other electronic device, remotely into a Point of Sale transaction terminal by pressing a payment button on the smartphone or on the magnetic stripe data transmitter.

According to one aspect of the invention, there is provided a magnetic stripe transmission (MST) device as set forth in the accompanying claim 1.

Optional aspects are set out in the accompanying claims 2 to 12, 16 to 19, and 24 to 28.

According to another aspect, there is provided an apparatus as set forth in the accompanying claim 13.

Optional aspects are set out in the accompanying claims 14 and 15.

According to another aspect, there is provided a system for a baseband near field magnetic data stripe transmitter, as set forth in the accompanying claim 20.

Optional aspects are set out in the accompanying claims 21 to 23.

### BRIEF DESCRIPTION OF THE DRAWINGS

Referring to the figures, wherein like numerals represent like parts throughout the several views:
FIG. 1 is an overview diagram of a baseband nearfield magnetic stripe data transmitter system;
FIG. 2 is a schematic diagram of a typical inductor used to generate the required magnetic field;
FIG. 3 is an overview diagram of another example of the baseband nearfield magnetic stripe data transmitter system;
FIG. 4 is an overview diagram of another baseband nearfield magnetic stripe data transmitter system;
FIG. 5 is a graphical representation of the inductor current versus time and the magnetic reader head output voltage versus time, for the system of FIG. 4;
FIG. 6 depicts an array of two inductors;
FIG. 7 depicts the inductor magnetic field; and
FIG. 8 is an overview diagram of an embodiment of the baseband nearfield magnetic stripe data transmitter system, according to this invention.

### DETAILED DESCRIPTION OF THE INVENTION

The present disclosure describes a system and a method for a baseband nearfield magnetic stripe data transmitter that transmits payment card data from a smartphone, or other electronic device, into a Point of Sale transaction terminal by pressing a payment button on the smartphone or on the magnetic stripe data transmitter.

Baseband Nearfield Magnetic Stripe Transmission (MST), the subject of this invention, uses a pulse modulated magnetic field to transmit from a distance data from a smartphone into a POS terminal. The system is able to transmit card data into the POS terminal's reader without it being in contact with, or in close proximity to (less than 1 mm), the reader head, or without the need to be inserted into the card reader slot. Furthermore, the system eliminates the need for the swiping motion required with magnetic stripe cards or prior-art magnetic stripe emulation or electronic magnetic stripes, as described by Narenda et al, in US 7,954,716.

The magnetic field is generated by a specially designed inductor, driven by a high power driver circuit. The inductor's unique structure results in a complex omnidirectional magnetic field that, from a distance, is able to penetrate the magnetic stripe reader head located in the POS terminal.

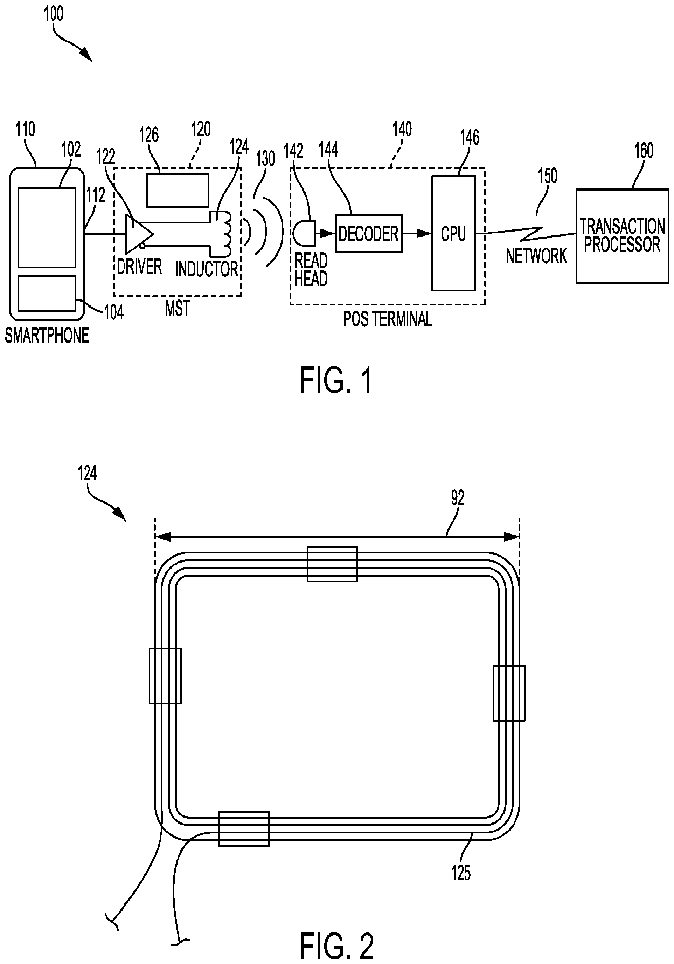

Referring to FIG. 2, inductor 124 includes one or more rectangular wire bundle(s) 125 of approximately 40x30 mm outside dimensions with a 3 mm bundle thickness. Inductor 124 has an inductance of such a value that properly timed current pulses reach their maximum value at the end of each pulse. Also, the ratio of inductance and winding resistance values is critical in shaping the current from the driver circuit to result in a magnetic field that closely resembles the magnetic signal seen by the magnetic reader head when a magnetic stripe card is swiped in front of it. In one example, the ratio of inductance to winding resistance is 80 µH/Ohm.

The physical shape of the inductor ensures that the magnetic flux lines are spread over a large enough area to include the sensing aperture of the reader head. The inductor windings may be enamel insulated magnet wire, or alternatively, the inductor may be implemented as a spiral inductor formed by conductor traces laid out on rigid or flexible printed circuit substrates.

Although the inductor is stationary, the inductor is driven by a series of timed current pulses that result in a series of magnetic pulses that resemble the fluctuating magnetic field created by a moving magnetic stripe. The modulation of the field follows the standard magnetic stripe encoding, which in turn results in a stream of electrical pulses on the reader's output that is identical to what would be obtained from a magnetic stripe.

The key benefit of MST is that it works with the existing infrastructure of point of sale card payment terminals. Unlike with NFC or 2D barcode, no external reader or new terminal has to be installed.

Referring to FIG. 1, a system 100, comprises a suitable driver 122 and inductor 124 contained in a small capsule 120, which is connected to the audio jack 1 12 of the phone 1 10. Smartphone 1 10 is loaded with a wallet software application 102. The phone 1 10 is connected to the Magstripe Transmitter 120 via its audio jack 1 12. To make a payment at a point of sale location equipped with a common card payment terminal capable of reading standard ISO/ABA magnetic stripe cards 140 the consumer selects the wallet application 102 on his smartphone 110 and selects one of the preloaded payment cards (i.e., Visa, MasterCard, Amex) he wants to use for the payment. He holds the phone close (2.5 to 5 cm (1 to 2 inches)) to the point of sale terminal 140 and presses the pay icon/key 104 on the phone 110. The wallet application 102 in the phone 110 sends to the MST 120 via the audio jack 112 a stream of pulses that contain the selected card's magnetic stripe data. The MST 120 amplifies, shapes and emits the pulses in the form of suitably modulated high energy magnetic impulses 130. The magnetic impulses 130 are picked up by the magstripe reader head 142 located in the point of sale payment terminal 140 and are converted into electrical pulses. The resulting electrical pulses are decoded by decoder 144 and processed by its central processing unit (CPU) 146, just like it would process a standard magnetic stripe card that was swiped through its reader slot. The merchant enters the payment amount and the transaction is sent by the POS terminal 140 via the network 150 to the payment transaction processor 160. The transaction processor 160 returns the transaction authorization and the POS terminal 140 prints a receipt. With the exception of the card entry method, the entire transaction is completed in the same manner as with a standard magnetic stripe card.

In another example of MST 120, security is improved by the smartphone supplementing the transaction transmitted through the payment terminal with a separate secure wireless message sent to the processor, where the two transactions are combined for the purposes of authentication.

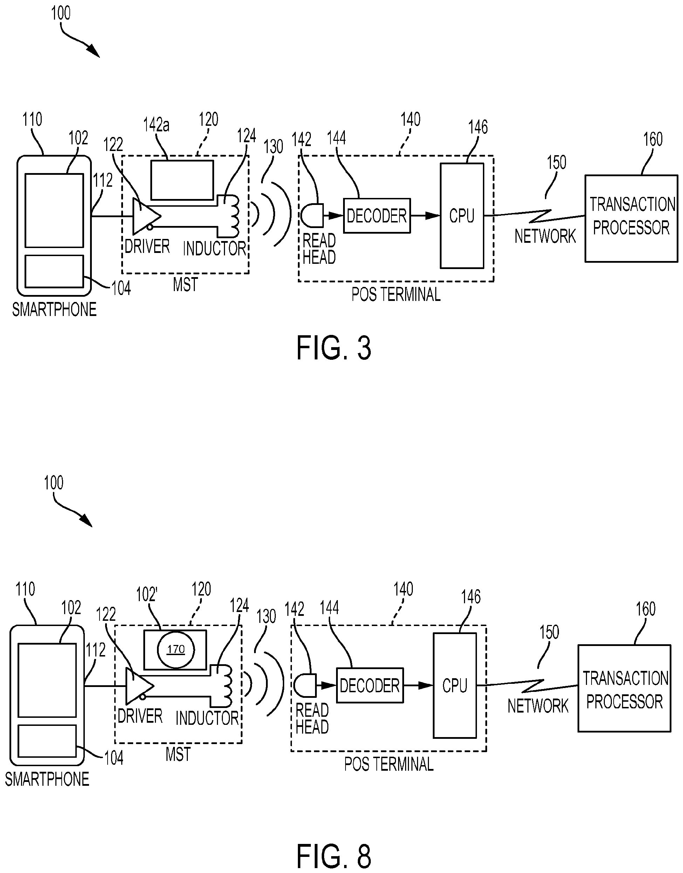

Referring to FIG. 3, in another example, the MST 120 is integrated with a magnetic stripe reader (MSR) head 142a, creating a single device able to both read and transmit magnetic stripe information. The combination of the MST and MSR in conjunction with an electronic wallet 102, provides a convenient and secure means of loading payment cards into an electronic wallet and the subsequent transmission of the payment card data to a POS system 140. Furthermore, this example allows convenient person to person payments using credit or debit cards, where each person is equipped with an MST and is able to transmit his card information into the other person's mobile phone with the card reader included in that person's MST.

In another example, magnetic stripe transmission is used to transmit tokenized card data to the point of sale terminal. In this example, the actual payment card number or part of it is substituted by a cryptographically generated token, which is formatted as track data, including token data formatted to resemble a standard Primary Account Number (PAN). The PAN may contain a valid Bank Identification Number (BIN). Such token is either downloaded from the card issuer, another online source, or is locally generated. The MST transmission of tokens replaces the transmission of valid card numbers by transmitting cryptographically generated tokens that are valid only for one transaction and thus eliminates the security risk inherent in the standard magnetic stripe, all without the need to change the existing point of sale hardware. In other examples, more than one track data are transmitted in order to increase compatibility with existing point of sale hardware and software. In these examples, the transmission of Track 1 data may be followed by the transmission of Track 2 data, or Track 2 data may be followed by Track 1 data.

In a further example, the MST 120 also contains a secure microcontroller 126 which provides secure local storage of the card data and directly drives the inductor driver circuit 122. This example allows the MST to operate detached from the phone in a store-and-transmit mode. In some examples, the MST further includes volatile and nonvolatile memory for the secure storage of card data and other personal information.

Yet another possible implementation uses Bluetooth™ communications between the phone 110 and the MST 120, where two-way communications is used for enhanced security and flexibility, including the retrieval by the phone of card data stored in the secure element formed by the MST's secure microcontroller 126.

In yet another possible implementation the MST 120 uses its built-in secure microcontroller 126 to encrypt, either partially or fully, the card data and transmits it via the magnetic field to the point of sale card reader.

In yet another possible implementation the payment card data comprise card verification value (CVV) data that are changed dynamically. In this case, the security of a transaction is improved due to the dynamic changing of the CVV data.

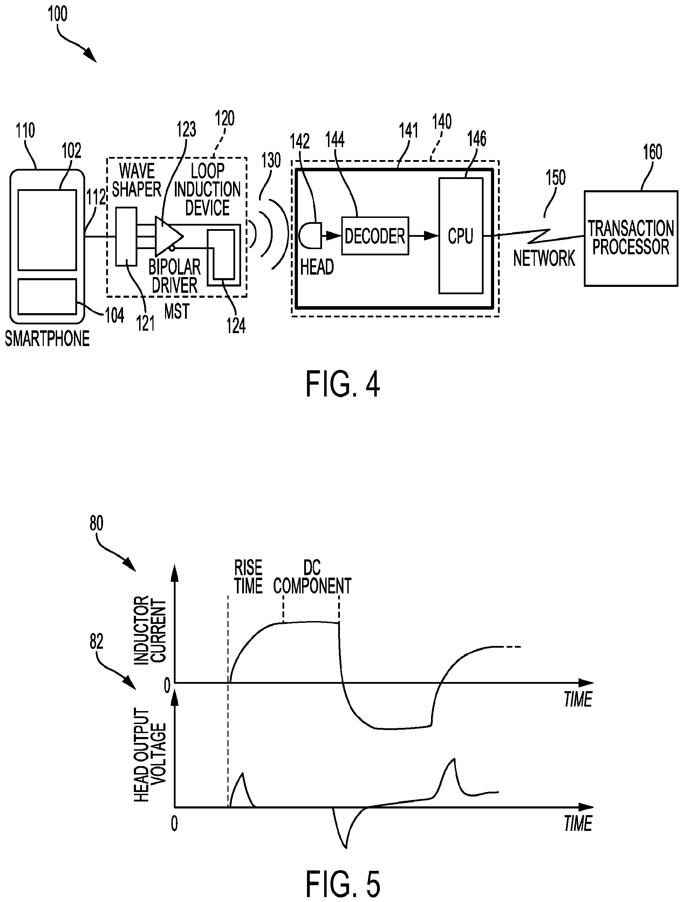

Referring to FIG. 4, in another system 100, is disclosed, in which Magstripe Transmitter (MST) 120 includes a wave shaper 121, a bipolar driver 123 and a loop inductor 124. Smartphone 110 is loaded with a wallet software application 102, and is connected to the Magstripe Transmitter 120 via its audio jack 112. To make a payment at a point of sale location equipped with a common card payment terminal capable of reading standard ISO/ABA magnetic stripe cards 140, the consumer selects the wallet application 102 on his smartphone 110 and selects one of the pre-loaded payment cards (i.e., Visa, MasterCard, Amex) he wants to use for the payment. He holds the phone close (2.5 to 5 cm (1 to 2 inches)) to the point of sale terminal 140 and presses the pay icon/key 104 on the phone 110. The wallet application 102 in the phone 110 sends to the MST 120 via the audio jack a stream of pulses that contain the selected card's magnetic stripe data. The MST 120 amplifies, shapes and emits the pulses in the form of suitably modulated high energy magnetic impulses 130. The magnetic impulses 130 are picked up by the magstripe reader head 142 located in the point of sale payment terminal 140 and are converted into electrical pulses. The resulting electrical pulses are decoded by decoder 144 and processed by its central processing unit (CPU) 146, just like it would process a standard magnetic stripe card that was swiped through its reader slot. The merchant enters the payment amount and the transaction is sent by the POS terminal 140 via the network 150 to the payment transaction processor 160. The transaction processor 160 returns the transaction authorization and the POS terminal 140 prints a receipt. With the exception of the card entry method, the entire transaction is completed in the same manner as with a standard magnetic stripe card.

The magnetic stripe reader-heads used in point of sale terminals are designed to be sensitive only to magnetic fields that originate close to and within their sensing aperture, which is located right in front of the head. They are designed to ignore external magnetic fields outside this sensing aperture. The intended pick-up distance is a fraction of an inch and the field of sensitivity is only a few degrees wide. Additionally, reader heads are surrounded by a metal shield 141 that greatly attenuates changing magnetic fields outside the head's intended sensing aperture, shown in FIG. 4. Further, the shield 141 is connected to the terminal's frame ground, which shunts to ground coupled common mode signals originating externally. These design features are aimed at ensuring that the head does not pick up noise from nearby electrical equipment, transmitters or cell-phones. These same design features also prevent remote induction of card data when using an ordinary inductor and pulses that resemble those generated by a moving magnetic stripe.

Accordingly, penetrating the shielding 141 of the reader-head from a distance longer than 13 mm (0.5 inches), and from most angles, requires special techniques, which are the subject of this disclosure. These techniques assure that the signal reaching the head's internal inductor is free of distortion and have the right shape and timings. In order to meet these requirements, the MST 120 pre-shapes the waves with the wave shaper 121 to compensate for the effects of the shielding, eddy currents and the limited inductance of the reader head 142. Referring to FIG. 5, a large DC component 81 is added to the inductor current 80 to compensate for the rapidly collapsing magnetic fields inside the head's 142 shielded enclosure 141 and the effects of the relatively low inductance of the reader-head winding. Additionally, the reader-head amplifier has limited bandwidth. To achieve sufficient induced signal amplitudes, the pulse rise times 82 is controlled to be between 10 and 60 microseconds. This ensures that that the pulse rise times fall within the bandwidth of the reader-head amplifier but not outside the timing constraints of the decoder circuit.

Furthermore, in order to achieve the required penetration from a distance larger than 13 mm (0.5 inches), a suitable driver 123 must deliver magnetic pulses having a large enough current, that exceeds 1 Ampere peak. Additionally, to create the right output on the reader-head, the current must be bipolar and must contain a large DC component, which is in excess of 40% of the peak current.

The inductive device 124 of the MST is specially designed to form a loosely coupled transformer, from a distance longer than 13 mm (0.5 inches), with the card reader-head 142, where the MST's inductor 124 is the primary and the reader-head's inductor is the secondary. Because the coupling between this primary and secondary is very loose, and because of the high losses caused by the head's shielding 141, as well as the losses caused by eddy currents, the current driving the inductor must be of a special level and shape. The magnetic field thus generated must be of a sufficient intensity that these losses are compensated for and sufficient signal is induced into the reader head's inductor.

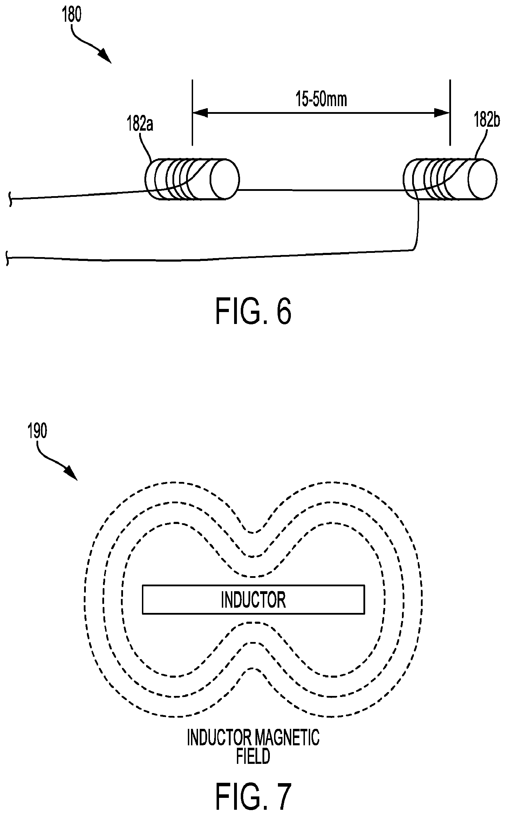

Therefore inductor 124 is designed to have a very specific set of characteristics to make it suitable for the transmission function. It has low enough winding resistance to allow the large current needed to generate the intense magnetic field. At the same time, it has sufficient inductance to control the rise time of the current pulses. The inductance required mandates a large number of turns (over 20), without increasing the winding resistance beyond 3 ohms. Concurrent with that, the inductor is shaped to provide a sufficiently well distributed magnetic field with few nulls, as shown in FIG. 7. Such an inductor is either a single inductor that encloses a large area (between 600 and 1700 square mm), shown in FIG. 2, or an array 180 of spatially distributed two or more inductors 182a, 182b covering the same area, shown in FIG. 6. The inductor (or inductors) may have either, iron or ferrite core(s), which is designed such as to not saturate under the high current driven through the inductor(s). In one example, the inductor 124 has a length 92 in the range between 15 mm to 50 mm. In another example, the MST 120 includes an array 180 of two inductors 182a, 182b separated by a distance in the range of 15 mm to 50 mm.

The traditional magnetic stripe data format does not contain features that protect it against copying. While the MST transmits the card data in a magnetic stripe format, the actual data transmitted does not have to be identical to the data contained in the magnetic stripe of the physical card.

The MST invention includes a secure transmission option where the card data is suitably modified by replacing part of the discretionary data field with a cryptographically generated dynamic element. This security data element, generated either in the phone or in the hardware of the MST, contains a secure hash which is generated using the card data, the MST ID and a sequence number that is incremented for each transmission, and encrypted by a Key supplied by either the card issuer of another third party. The issuer of the Key is able to calculate this secure hash, using the Key, and thus able to verify that a transaction has originated from a legitimate device using legitimate card data. Because the secure hash changes with every transaction in an unpredictable way, a fraudster (who does not know the Key) cannot calculate a valid hash for a new transaction. As each transaction contains a sequence number, the recipient is able to identify a replay. Also, because the secure hash replaces a crucial part of the original discretionary data field, data captured from an MST transaction is unsuitable for creating a valid counterfeit card.

By modifying only the part of the card data which is not used by the retailer and the acquirer, this scheme preserves compatibility with existing retail POS and acquirer processing system.

Referring to FIG. 8, in an embodiment of this invention 100, Magstripe Transmitter (MST) 120 further includes a payment button ("Button Pay") 170. Button Pay 170 is programmed to be associated with a specific pre-selected payment card that is stored in an electronic wallet. The electronic wallet 102 or 102' may be located in the mobile phone 110 or the MST 120, as shown in FIG. 8. Pressing the Button Pay 170 causes the data of the specific pre-selected payment card to be transmitted to the point of sale payment terminal 140. Accordingly, in order to make a payment at a point of sale location equipped with a common card payment terminal capable of reading standard ISO/ABA magnetic stripe cards 140, the consumer presses the Button Pay 170 on the MST 120 and the system automatically selects the pre-programmed and pre-selected specific payment card that is associated with the Button Pay 170 and this causes the mobile phone 110 to send a stream of pulses that contain the pre-selected card's magnetic stripe data to the MST 120. The stream of pulses that contain the pre-selected card's magnetic stripe data are amplified, shaped and emitted by the MST in the form of suitably modulated high energy magnetic impulses 130. The magnetic impulses 130 are picked up by the mag-stripe reader head 142 located in the point of sale payment terminal 140 and are converted into electrical pulses. The resulting electrical pulses are decoded by decoder 144 and processed by its central processing unit (CPU) 146. The merchant enters the payment amount and the transaction is sent by the POS terminal 140 via the network 150 to the payment transaction processor 160. The transaction processor 160 returns the transaction authorization and the POS terminal 140 prints a receipt. Other embodiments include one or more of the following. Key 104 in the mobile phone 110 is programmed to be associated with a specific payment card and functions as a Button Pay. The user is notified by the mobile phone that the Button Pay was activated. The MST device is detached from the mobile phone and the Button Pay is remotely activated via the mobile phone's Bluetooth network.

Button Pay is very convenient to use because the consumer does not need to open the electronic wallet and select a card, or does not need to pull out the physical wallet and a card to present to the cashier. This convenience leads to changes in consumer behavior that could be very important to card issuers. Normally, with a physical or electronic wallet, the consumer has a relatively easy choice of pulling out or selecting one of a number of cards in his wallet, normally based on some "strategy" (Amex for entertainment, Visa for purchases, Visa debit for the groceries, etc.). Button Pay provides very convenient access to one card and therefore that card is used for everything. Button Pay changes the relatively level playing field offered by a conventional or electronic wallet in favor of one particular card. The average time for paying with the Button Pay is 3-4 seconds, whereas the average time for paying with a physical card is 17-22 seconds and the average time for paying with a card stored in an electronic wallet is 14-17 seconds.

Several examples and embodiments of the present invention have been described. Nevertheless, it will be understood that various modifications may be made without departing from the scope of the invention as defined by the accompanying claims.

## Claims

1. A magnetic stripe transmission (MST) device (120) comprising:
a driver (122);
an inductor (124);
wherein the MST device (120) is configured to receive a stream of pulses comprising magnetic stripe data of a payment card, to shape and amplify the received stream of pulses and to generate and emit magnetic pulses comprising the magnetic stripe data of the payment card;
**characterized in that** the device further comprises a payment button (170) located in the MST device (120) and programmed to be associated with a pre-selected payment card; and
wherein activating the payment button (170) causes the MST device (120) to receive a stream of pulses comprising magnetic stripe data of the preselected payment card, to shape and amplify the received stream of pulses and to generate and emit magnetic pulses (130) comprising the magnetic stripe data of the preselected payment card,
wherein the magnetic pulses are formatted to be compatible with and to be contactlessly picked up by an existing infrastructure of a magnetic stripe reader head (142) located in a point of sale (POS) payment terminal (140).

2. The MST device of claim 1, wherein the magnetic stripe data of the preselected payment card are stored in a memory of the MST device (120).

3. The MST device of claim 1, wherein the magnetic stripe data of the preselected payment card are stored in a memory of a mobile phone (110).

4. The MST device of any preceding claim,
wherein the driver (122) is configured to output a series of timed current pulses associated with magnetic stripe data of the pre-selected payment card; and
wherein the inductor (124) has one or more windings (125) configured to emit magnetic pulses based on the series of timed current pulses,
wherein the inductor (124) is configured to cause the series of timed current pulses for having a rising time, the one or more windings (125) of the inductor to generate the magnetic pulses.

5. The MST device of claim 4, wherein the windings of the inductor (124) are formed on a planar substrate layer.

6. The MST device of claim 4, wherein the inductor (124) comprises a plurality of loop windings laid out on a printed circuit board substrate.

7. The MST device of claim 6, wherein the loop windings comprise rectangular wire bundles (125).

8. The MST device of any preceding claim, wherein:
the magnetic stripe data of the pre-selected payment card comprise first data corresponding to first track data and second data corresponding to second track data, and
the magnetic pulses, to be received by the magnetic read head (142), are emitted by the inductor (124) in a first sequence comprising transmission of the second data followed by transmission of the first data, and in a second sequence comprising transmission of the first data followed by transmission of the second data.

9. The MST device of any of claims 1 to 7, wherein:
the magnetic stripe data of the pre-selected payment card comprise first data corresponding to track1 data of track 1 of a standard ISO/ABA magnetic stripe card and second data corresponding to track2 data of track 2 of the standard ISO/ABA magnetic stripe card, and
the magnetic pulses, to be received by the magnetic read head (142), are emitted by the inductor (124) in a first sequence comprising transmission of the first data followed by transmission of the second data, and in a second sequence comprising transmission of the second data followed by transmission of the first data.

10. The MST device of any of claims 1 to 7 wherein:
the magnetic stripe data of the pre-selected payment card comprise first data corresponding to first track data and second data corresponding to second track data, and
the magnetic pulses, to be received by the magnetic read head (142), are emitted by the inductor (124) in a sequence comprising transmission of the second data followed by transmission of the first data.

11. The MST device of any preceding claim, wherein:
the magnetic pulses, to be received by the magnetic read head (142), emitted by the inductor (124) comprise transmission of data generated based on cryptographically generated dynamic element replacing part of the magnetic stripe data.

12. The MST device of any preceding claim, wherein the driver (122) comprises a bipolar driver to generate bipolar current pulses exceeding 1 Ampere peak.

13. An apparatus comprising:
the MST device of any preceding claim;
a memory for storing a wallet application (102; 102') and information regarding a plurality of payment cards including the pre-selected payment card; and
a controller configured to:
execute the wallet application (102; 102') to select one of the plurality of payment cards based on a user input and to transmit a first stream of pulses associated with first magnetic stripe data of the selected payment card; and
transmit a second stream of pulses associated with second magnetic stripe data of the pre-selected payment card in response to an activation of the payment button (170) without opening the wallet application (102; 102') for selection of one of the plurality of payment cards;
wherein the driver (122) is configured to output a first series of timed current pulses in response to the first stream of pulses, and to output a second series of timed current pulses in response to the second stream of pulses.

14. The apparatus of claim 13, wherein the controller is configured to encrypt payment card information using a token downloaded from a card issuer, which is valid only for one magnetic stripe transmission transaction.

15. The apparatus of claim 13, wherein the controller is configured to:
receive a key supplied by a card issuer or another third party, and
encrypt payment card information using the key prior to transmission.

16. The MST device of any of claims 4 to 12, when incorporating the features of claim 4:
wherein the inductor (124) has an inductance value coupled to the driver (122), which when driven by the output of the series of timed current pulses from the driver (122) results in emission of the magnetic pulses having a rising time that emulates fluctuating magnetic field created by a moving magnetic stripe.

17. The MST device of claim 16, further comprising:
a memory for storing a wallet application (102; 102'),
a controller configured to execute the wallet application (102; 102') to select one of a plurality of payment cards based on a user input and to transmit the stream of pulses associated with magnetic stripe data of the selected payment card,
wherein the magnetic pulses associated with the magnetic stripe data of the pre-selected payment card are emitted in response to the activating of the payment button without opening the wallet application (102; 102') for selection of one of the plurality of payment cards.

18. The MST device of claim 16, further comprising:
a controller, wherein the controller is configured to encrypt payment card information using a token downloaded from a card issuer, which is valid only for one magnetic stripe transmission transaction.

19. The MST device of claim 16, further comprising:
a controller, wherein the controller is configured to:
receive a key supplied by a card issuer or another third party, and
encrypt payment card information using the key prior to emission of magnetic pulses corresponding to the payment card information.

20. A system for a baseband near field magnetic stripe data transmitter comprising:
a mobile phone (110) comprising a payment wallet application (102) and being configured to transmit a stream of pulses comprising magnetic stripe data of a pre-selected payment card; and
a magnetic stripe transmission (MST) device (120) according to any of claims 1 of 12 or 16 to 19, wherein the MST (120) device is configured to receive the stream of pulses from the mobile phone (110);
wherein the inductor (124) is driven by a series of timed current pulses that result in a series of magnetic pulses that resemble the fluctuating magnetic field created by a moving magnetic stripe; and
wherein activating of the payment button (170) located in the MST device 120 causes the mobile phone (110) to transmit the stream of pulses comprising the magnetic stripe data of the pre-selected payment card, initiating the emission of magnetic pulses comprising the magnetic stripe data of the pre-selected payment card.

21. The system of claim 20, further comprising a the payment button (104) located in the mobile phone (110), wherein the payment button (104) located in the mobile phone is programmed to be associated with the preselected payment card and wherein activating of the payment button (104) located in the mobile phone initiates the emission of the magnetic pulses.

22. The system of claim 20 or claim 21, wherein the mobile phone (110) is configured to output a notification that the payment button (170) located in the MST device (120) was activated.

23. The system of any of claims 20 to 22, wherein the payment button (170) located in the MST device (120) is configured to be activated remotely via a wireless connection.

24. The MST device of any of claims 1 to 12 or 16 to 19, further comprising a wave shaper (121) that receives the stream of pulses from the mobile phone, and shapes the stream of pulses to output shaped pulses to the driver (122) by controlling pulse rise time (82) to be between 10 to 60 microseconds.

25. The MST device of claim 24, wherein the wave shaper (121) further shapes the received stream of pulses to add a DC component (81) to the shaped pulses.

26. The MST device of any of claims 1 to 12, 16 to 19, 24 or 25, further comprising a magnetic read head (142) comprising a magnetic read head inductor and wherein the inductor (124) of the MST device (120) is configured to form a loosely coupled transformer with the magnetic read head inductor from a distance longer than 12.7 mm (0.5 inches) by having over twenty turns (125) and a winding resistance no greater than three ohms.

27. The MST device of any of claims 1 to 12, 16 to 19 or 24 to 26, wherein the driver (122) comprises a bipolar driver to generate bipolar current pulses with peak current exceeding 1 Ampere, and containing a DC component which is in excess of forty percent of peak current, and
wherein the inductor (124) of the MST device (120) comprises an iron or ferrite core and wherein said core is designed not to saturate in response to the bipolar current pulses flowing through the inductor.

28. The MST device of any of claims 1 to 12, 16 to 19 or 24 to 27,
wherein the inductor (124) comprises one or more windings (125), and wherein said one or more windings are configured to generate magnetic flux lines that are spread over an area between 600 and 1700 square mm.

## Patentansprüche

1. Magnetstreifenübertragungsvorrichtung (MST-Vorrichtung) (120), umfassend:
einen Treiber (122);
einen Induktor (124);
wobei die MST-Vorrichtung (120) so gestaltet ist, dass sie einen Impulsstrom empfängt, der Magnetstreifendaten einer Zahlungskarte umfasst, um den empfangenen Impulsstrom zu formen und zu verstärken und um Magnetimpulse zu erzeugen und zu emittieren, welche die Magnetstreifendaten der Zahlungskarte umfassen;
**dadurch gekennzeichnet, dass** die Vorrichtung ferner folgendes umfasst:
eine Zahlungstaste (170), die sich in der MST-Vorrichtung (120) befindet und so programmiert ist, dass sie einer vorab ausgewählten Zahlungskarte zugeordnet werden kann; und
wobei die Aktivierung der Zahlungstaste (170) bewirkt, dass die MST-Vorrichtung (120) einen Impulsstrom empfängt, der Magnetstreifendaten der vorab ausgewählten Zahlungskarte umfasst, um den empfangenen Impulsstrom zu formen und zu verstärken und um Magnetimpulse (130) zu erzeugen und zu emittieren, welche die Magnetstreifendaten der vorab ausgewählten Zahlungskarte umfassen;
wobei die Magnetimpulse so formatiert sind, dass sie mit einer bestehenden Infrastruktur kompatibel sind und berührungslos von einem Magnetstreifenlesekopf (142) aufgenommen werden, der sich in einem Zahlungsterminal (140) eines Point of Sale (POS) befindet.

2. MST-Vorrichtung nach Anspruch 1, wobei die Magnetstreifendaten der vorab ausgewählten Zahlungskarte in einem Speicher der MST-Vorrichtung (120) gespeichert werden.

3. MST-Vorrichtung nach Anspruch 1, wobei die Magnetstreifendaten der vorab ausgewählten Zahlungskarte in einem Speicher eines Mobiltelefons (110) gespeichert werden.

4. MSST-Vorrichtung nach einem der vorstehenden Ansprüche,
wobei der Treiber (122) so gestaltet ist, dass er eine Reihe zeitgesteuerter Stromimpulse ausgibt, die Magnetstreifendaten der vorab ausgewählten Zahlungskarte zugeordnet sind; und
wobei der Induktor (124) eine oder mehrere Wicklungen (125) aufweist, die so gestaltet sind, dass sie auf der Basis der Reihe zeitgesteuerter Stromimpulse Magnetimpulse emittieren;
wobei der Induktor (124) so gestaltet ist, dass er es bewirkt, dass die Reihe zeitgesteuerter Stromimpulse eine Anstiegszeit aufweist, so dass die eine oder die mehreren Wicklungen (125) des Induktors die Magnetimpulse erzeugen.

5. MST-Vorrichtung nach Anspruch 4, wobei die Wicklungen des Induktors (124) auf einer planaren Substratschicht ausgebildet sind.

6. MST-Vorrichtung nach Anspruch 4, wobei der Induktor (124) eine Mehrzahl von Schleifenwicklungen umfasst, die auf einem Leiterplattensubstrat angeordnet sind.

7. MST-Vorrichtung nach Anspruch 6, wobei die Schleifenwicklungen rechteckige Drahtbündel (125) umfassen.

8. MST-Vorrichtung nach einem der vorstehenden Ansprüche, wobei:
die Magnetstreifendaten der vorab ausgewählten Zahlungskarte erste Daten umfassen, die ersten Spurdaten entsprechen, und zweite Daten, die zweiten Spurdaten entsprechen; und
die Magnetimpulse, die zum Empfang durch den Magnetlesekopf (142) vorgesehen sind, durch den Induktor (124) in einer ersten Sequenz emittiert werden, welche die Übermittlung der zweiten Daten gefolgt von der Übermittlung der ersten Daten umfasst, und in einer zweiten Sequenz, welche die Übermittlung der ersten Daten gefolgt von der Übermittlung der zweiten Daten umfasst.

9. MST-Vorrichtung nach einem der Ansprüche 1 bis 7, wobei:
die Magnetstreifendaten der vorab ausgewählten Zahlungskarte erste Daten umfassen, die den Spur1-Daten der Spur 1 einer Magnetstreifenkarte gemäß ISO/ABA-Norm entsprechen, und zweite Daten, die den Spur2-Daten der Spur 2 einer Magnetstreifenkarte gemäß ISO/ABA-Norm entsprechen; und
die Magnetimpulse, die zum Empfang durch den Magnetlesekopf (142) vorgesehen sind, durch den Induktor (124) in einer ersten Sequenz emittiert werden, welche die Übermittlung der ersten Daten gefolgt von der Übermittlung der zweiten Daten umfasst, und in einer zweiten Sequenz, welche die Übermittlung der zweiten Daten gefolgt von der Übermittlung der ersten Daten umfasst.

10. MST-Vorrichtung nach einem der Ansprüche 1 bis 7, wobei:
die Magnetstreifendaten der vorab ausgewählten Zahlungskarte erste Daten umfassen, die ersten Spurdaten entsprechen, und zweite Daten, die zweiten Spurdaten entsprechen; und
die Magnetimpulse, die zum Empfang durch den Magnetlesekopf (142) vorgesehen sind, durch den Induktor (124) in einer Sequenz emittiert werden, welche die Übermittlung der zweiten Daten gefolgt von der Übermittlung der ersten Daten umfasst.

11. MST-Vorrichtung nach einem der vorstehenden Ansprüche, wobei:
die Magnetimpulse, die zum Empfang durch den Magnetlesekopf (142) vorgesehen sind, die durch den Induktor (124) emittiert werden, die Übermittlung von Daten umfassen, die auf der Basis eines kryptografisch erzeugten dynamischen Elements erzeugt werden, das einen Teil der Magnetstreifendaten ersetzt.

12. MST-Vorrichtung nach einem der vorstehenden Ansprüche, wobei der Treiber (122) einen bipolaren Treiber umfasst, um bipolare Stromimpulse zu erzeugen, die eine Spitze von 1 Ampere überschreiten.

13. Vorrichtung, umfassend:
die MST-Vorrichtung nach einem der vorstehenden Ansprüche;
einen Speicher zum Speichern einer Wallet-Anwendung (102; 102') und von Informationen zu einer Mehrzahl von Zahlungskarten, einschließlich der vorab ausgewählten Zahlungskarte; und
eine Steuereinheit, die für folgende Zwecke gestaltet ist:
Ausführen der Wallet-Anwendung (102; 102'), um eine der Mehrzahl von Zahlungskarten auf der Basis einer Benutzereingabe auszuwählen und um einen ersten Impulsstrom zu übermitteln, der ersten Magnetstreifendaten der ausgewählten Zahlungskarte zugeordnet ist; und
Übermitteln eines zweiten Impulsstroms, der zweiten Magnetstreifendaten der vorab ausgewählten Zahlungskarte zugeordnet ist, als Reaktion auf eine Aktivierung der Zahlungstaste (170), ohne die Wallet-Anwendung (102; 102') für die Auswahl einer der Mehrzahl von Zahlungskarten zu öffnen;
wobei der Treiber (122) so gestaltet ist, dass er eine erste Reihe zeitgesteuerter Stromimpulse als Reaktion auf den ersten Impulsstrom ausgibt, und dass er als Reaktion auf den zweiten Impulsstrom eine zweite Reihe zeitgesteuerter Stromimpulse ausgibt.

14. Vorrichtung nach Anspruch 13, wobei die Steuereinheit so gestaltet ist, dass sie Zahlungskarteninformationen unter Verwendung eines von einem Kartenemittenten heruntergeladenen Token verschlüsselt, der nur für eine Magnetstreifenübermittlungstransaktion gültig ist.

15. Vorrichtung nach Anspruch 13, wobei die Steuereinheit für folgende Zwecke gestaltet ist:
Empfangen eines Schlüssels, der durch einen Kartenemittenten oder einen anderen Dritten bereitgestellt wird; und
Verschlüsseln von Zahlungskarteninformationen unter Verwendung des Schlüssels vor der Übermittlung.

16. MST-Vorrichtung nach einem der Ansprüche 4 bis 12 bei Inkorporation der Merkmale aus Anspruch 4:
wobei der Induktor (124) einen Induktanzwert aufweist, der mit dem Treiber (122) gekoppelt ist, wobei der Induktor, wenn er durch die Ausgabe der Reihe zeitgesteuerter Stromimpulse von dem Treiber (122) gesteuert wird, in der Folge zur Emission der Magnetimpulse mit einer ansteigenden Zeit führt, wodurch ein schwankendes Magnetfeld, das durch einen sich bewegenden Magnetstreifen erzeugt wird, emuliert wird.

17. MST-Vorrichtung nach Anspruch 16, ferner umfassend:
einen Speicher zum Speichern einer Wallet-Anwendung (102; 102');
eine Steuereinheit, die so gestaltet ist, dass sie die Wallet-Anwendung (102; 102') ausführt, um eine einer Mehrzahl von Zahlungskarten auf der Basis einer Benutzereingabe auszuwählen und um den Impulsstrom zu übermitteln, der Magnetstreifendaten der ausgewählten Zahlungskarte zugeordnet ist;
wobei die Magnetimpulse, die den Magnetstreifendaten der vorab ausgewählten Zahlungskarte zugeordnet sind, als Reaktion auf die Aktivierung der Zahlungstaste, ohne die Wallet-Anwendung (102; 102') für die Auswahl einer der Mehrzahl von Zahlungskarten zu öffnen, emittiert werden.

18. MST-Vorrichtung nach Anspruch 16, ferner umfassend:
eine Steuereinheit, wobei die Steuereinheit so gestaltet ist, dass sie Zahlungskarteninformationen unter Verwendung eines von einem Kartenemittenten heruntergeladenen Token verschlüsselt, der nur für eine Magnetstreifenübermittlungstransaktion gültig ist.

19. MST-Vorrichtung nach Anspruch 16, ferner umfassend:
eine Steuereinheit, wobei die Steuereinheit für folgende Zwecke gestaltet ist:
Empfangen eines Schlüssels, der durch einen Kartenemittenten oder einen anderen Dritten bereitgestellt wird; und
Verschlüsseln von Zahlungskarteninformationen unter Verwendung des Schlüssels vor der Emission von Magnetimpulsen, die den Zahlungskarteninformationen entsprechen.

20. System für einen Baseband-Nahfeld-Magnetstreifendatensender, umfassend:
ein Mobiltelefon (110), das eine Zahlungs-Wallet-Anwendung (102) umfasst und so gestaltet ist, dass es einen Impulsstrom übermittelt, der Magnetstreifendaten einer vorab ausgewählten Zahlungskarte umfasst; und
eine Magnetstreifenübertragungsvorrichtung (MST-Vorrichtung) (120) nach einem der Ansprüche 1 bis 12 oder 16 bis 19, wobei die MST-Vorrichtung (120) so gestaltet ist, dass sie den Impulsstrom von dem Mobiltelefon (110) empfängt;
wobei der Induktor (124) durch eine Reihe zeitgesteuerter Stromimpulse angesteuert wird, die zu einer Reihe von Magnetimpulsen führen, welche dem schwankenden Magnetfeld entsprechen, das durch einen sich bewegenden Magnetstreifen erzeugt wird; und
wobei eine Aktivierung der Zahlungstaste (170), die sich in der MST-Vorrichtung (120) befindet, bewirkt, dass das Mobiltelefon (110) den Impulsstrom übermittelt, der die Magnetstreifendaten der vorab ausgewählten Zahlungskarte umfasst, wobei die Emission von Magnetimpulsen eingeleitet wird, welche die Magnetstreifendaten der vorab ausgewählten Zahlungskarte umfassen.

21. System nach Anspruch 20, ferner umfassend eine Zahlungstaste (104), die sich in dem Mobiltelefon (110) befindet, wobei die sich in dem Mobiltelefon befindende Zahlungstaste (104) für eine Zuordnung zu der vorab ausgewählten Zahlungskarte programmiert ist, und wobei eine Aktivierung der sich in dem Mobiltelefon befindenden Zahlungstaste (104) die Emission der Magnetimpulse einleitet.

22. System nach Anspruch 20 oder 21, wobei das Mobiltelefon (110) so gestaltet ist, dass es eine Benachrichtigung ausgibt, dass die sich in der MST-Vorrichtung (120) befindende Zahlungstaste (170) aktiviert worden ist.

23. System nach einem der Ansprüche 20 bis 22, wobei die sich in der MST-Vorrichtung (120) befindende Zahlungstaste (170) für eine Aktivierung aus der Ferne über eine Funkverbindung gestaltet ist.

24. MST-Vorrichtung nach einem der Ansprüche 1 bis 12 oder 16 bis 19, ferner umfassend einen Wellenformer (121), der den Impulsstrom von dem Mobiltelefon empfängt und den Impulsstrom so formt, dass geformte Impulse an den Treiber (122) ausgegeben werden, indem die Impulsanstiegszeit (82) so gesteuert wird, dass sie zwischen 10 und 60 Mikrosekunden liegt.

25. MST-Vorrichtung nach Anspruch 24, wobei der Wellenformer (121) den empfangenen Impulsstrom ferner so formt, dass den geformten Impulsen eine Gleichstromkomponente (81) hinzugefügt wird.

26. MST-Vorrichtung nach einem der Ansprüche 1 bis 12, 16 bis 19, 24 oder 25, ferner umfassend einen Magnetlesekopf (142), der einen Magnetlesekopfinduktor umfasst, und wobei der Induktor (124) der MST-Vorrichtung (120) so gestaltet ist, dass er einen Transformator aus einem Abstand von nicht mehr als 12,7 mm (0,5 Zoll) mit dem Magnetlesekopfinduktor dadurch lose koppelt, dass mehr als zwanzig Wicklungen (125) und ein Wicklungswiderstand von nicht mehr als drei Ohm aufweist.

27. MST-Vorrichtung nach einem der Ansprüche 1 bis 12, 16 bis 19, oder 24 bis 26, wobei der Treiber (122) einen bipolaren Treiber umfasst, um bipolare Stromimpulse mit einem Spitzenstrom zu erzeugen, der 1 Ampere überschreitet, und mit einer Gleichstromkomponente, die über vierzig Prozent des Spitzenstroms liegt; und
wobei der Induktor (124) der MST-Vorrichtung (120) einen Eisen- oder Ferritkern umfasst, und wobei der Kern so gestaltet ist, dass er nicht gesättigt wird als Reaktion auf die durch den Induktor fließenden bipolaren Stromimpulse.

28. MST-Vorrichtung nach einem der Ansprüche 1 bis 12, 16 bis 19, oder 24 bis 27,
wobei der Induktor (124) eine oder mehrere Wicklungen (125) umfasst, und wobei die eine oder die mehreren Wicklungen so gestaltet ist bzw. sind, dass sie Magnetfeldlinien erzeugt bzw. erzeugen, die über eine Fläche von 600 bis 1700 mm² verteilt angeordnet sind.

## Revendications

1. Dispositif de transmission à bande magnétique (MST) (120) comprenant :
un circuit d'attaque (122) ;
une inductance (124) ;
le dispositif MST (120) étant conçu pour recevoir un flux d'impulsions comprenant des données de bande magnétique d'une carte de paiement, pour former et amplifier le flux d'impulsions reçu et pour générer et émettre des impulsions magnétiques comprenant les données de bande magnétique de la carte de paiement ;
**caractérisé en ce que** le dispositif comprend en outre
un bouton de paiement (170) situé dans le dispositif MST (120) et programmé pour être associé à une carte de paiement présélectionnée ; et
l'activation du bouton de paiement (170) amenant le dispositif MST (120) à recevoir un flux d'impulsions comprenant des données de bande magnétique de la carte de paiement présélectionnée, à former et amplifier le flux d'impulsions reçu et à générer et émettre des impulsions magnétiques (130) comprenant les données de bande magnétique de la carte de paiement présélectionnée,
les impulsions magnétiques étant formatées pour être compatibles avec et captées sans contact par une infrastructure existante d'une tête de lecture de bande magnétique (142) située dans un terminal de paiement (140) de point de vente (POS).

2. Dispositif MST selon la revendication 1, les données de bande magnétique de la carte de paiement présélectionnée étant stockées dans une mémoire du dispositif MST (120).

3. Dispositif MST selon la revendication 1, les données de bande magnétique de la carte de paiement présélectionnée étant stockées dans la mémoire d'un téléphone mobile (110).

4. Dispositif MST selon l'une quelconque des revendications précédentes,
le circuit d'attaque (122) étant conçu pour délivrer une série d'impulsions de courant cadencées associées à des données de bande magnétique de la carte de paiement présélectionnée ; et
l'inductance (124) ayant un ou plusieurs enroulements (125) conçus pour émettre des impulsions magnétiques en fonction de la série d'impulsions de courant cadencées,
l'inductance (124) étant conçue pour amener la série d'impulsions de courant cadencées à avoir un temps ascendant, l'au moins un enroulement (125) de l'inductance générant les impulsions magnétiques.

5. Dispositif MST selon la revendication 4, les enroulements de l'inductance (124) étant formés sur une couche de substrat plane.

6. Dispositif MST selon la revendication 4, l'inductance (124) comprenant une pluralité d'enroulements en boucle disposés sur un substrat de carte de circuit imprimé.

7. Dispositif MST selon la revendication 6, les enroulements en boucle comprenant des faisceaux de fils rectangulaires (125).

8. Dispositif MST selon l'une quelconque des revendications précédentes,
les données de bande magnétique de la carte de paiement présélectionnée comprenant des premières données correspondant à des premières données de piste et des secondes données correspondant à des secondes données de piste, et
les impulsions magnétiques, destinées à être reçues par la tête de lecture magnétique (142), étant émises par l'inductance (124) dans une première séquence comprenant la transmission des secondes données suivie de la transmission des premières données, et dans une seconde séquence comprenant la transmission des premières données suivie de la transmission des secondes données.

9. Dispositif MST selon l'une quelconque des revendications 1 à 7,
les données de bande magnétique de la carte de paiement présélectionnée comprenant des premières données correspondant aux données track1 de la piste 1 d'une carte à bande magnétique ISO/ABA standard et des secondes données correspondant aux données track2 de la piste 2 de la carte à bande magnétique ISO/ABA standard, et
les impulsions magnétiques, destinées à être reçues par la tête de lecture magnétique (142), étant émises par l'inductance (124) dans une première séquence comprenant la transmission des premières données suivie de la transmission des secondes données, et dans une seconde séquence comprenant la transmission des secondes données suivie de la transmission des premières données.

10. Dispositif MST selon l'une quelconque des revendications 1 à 7,
les données de bande magnétique de la carte de paiement présélectionnée comprenant des premières données correspondant à des premières données de piste et des secondes données correspondant à des secondes données de piste, et
les impulsions magnétiques, destinées à être reçues par la tête de lecture magnétique (142), étant émises par l'inductance (124) dans une séquence comprenant la transmission des secondes données suivie de la transmission des premières données.

11. Dispositif MST selon l'une quelconque des revendications précédentes,
les impulsions magnétiques, destinées à être reçues par la tête de lecture magnétique (142), émises par l'inductance (124) comprenant la transmission de données générées en fonction d'un élément dynamique généré cryptographiquement remplaçant une partie des données de bande magnétique.

12. Dispositif MST selon l'une quelconque des revendications précédentes, le circuit d'attaque (122) comprenant un circuit d'attaque bipolaire pour générer des impulsions de courant bipolaire dépassant 1 Ampère crête.

13. Appareil, comprenant :
le dispositif MST selon l'une quelconque des revendications précédentes ;
une mémoire pour stocker une application de portefeuille (102 ; 102') et des informations concernant une pluralité de cartes de paiement, y compris la carte de paiement présélectionnée ; et
un dispositif de commande conçu pour :
exécuter l'application de portefeuille (102 ; 102') pour sélectionner l'une de la pluralité de cartes de paiement en fonction d'une entrée utilisateur et pour transmettre un premier flux d'impulsions associées aux premières données de la première bande magnétique de la carte de paiement sélectionnée ; et
transmettre un second flux d'impulsions associées à la seconde bande magnétique de la carte de paiement présélectionnée en réponse à une activation du bouton de paiement (170) sans ouvrir l'application portefeuille (102 ; 102') pour la sélection de l'une de la pluralité de cartes de paiement ;
le circuit d'attaque (122) étant conçu pour délivrer une première série d'impulsions de courant cadencées en réponse au premier flux d'impulsions, et pour délivrer une seconde série d'impulsions de courant cadencées en réponse au second flux d'impulsions.

14. Appareil selon la revendication 13, le dispositif de commande étant conçu pour crypter des informations de carte de paiement en utilisant un jeton téléchargé d'un émetteur de carte, qui n'est valable que pour une seule transaction de transmission à bande magnétique.

15. Appareil selon la revendication 13, le dispositif de commande étant conçu pour :
recevoir une clé fournie par un émetteur de carte ou un autre tiers, et
crypter les informations relatives à la carte de paiement en utilisant la clé avant la transmission.

16. Dispositif MST selon l'une quelconque des revendications 4 à 12, lorsqu'elles incorporent les caractéristiques de la revendication 4 :
l'inductance (124) ayant une valeur d'inductance couplée au circuit d'attaque (122), qui, lorsqu'elle est entraînée par la délivrance de la série d'impulsions de courant cadencées provenant du circuit d'attaque (122), résulte en une émission des impulsions magnétiques ayant un temps ascendant qui émule un champ magnétique fluctuant créé par une bande magnétique en mouvement.

17. Dispositif MST selon la revendication 16, comprenant en outre :
une mémoire pour stocker une application de portefeuille (102 ; 102'),
un dispositif de commande conçu pour exécuter l'application de portefeuille (102 ; 102') pour sélectionner l'une d'une pluralité de cartes de paiement en fonction d'une entrée utilisateur et pour transmettre le flux d'impulsions associées aux données de bande magnétique de la carte de paiement sélectionnée,
les impulsions magnétiques associées aux données de bande magnétique de la carte de paiement présélectionnée étant émises en réponse à l'activation du bouton de paiement sans ouvrir l'application de portefeuille (102 ; 102') pour la sélection de l'une de la pluralité de cartes de paiement.

18. Dispositif MST selon la revendication 16, comprenant en outre :
un dispositif de commande, le dispositif de commande étant conçu pour crypter des informations de carte de paiement en utilisant un jeton téléchargé d'un émetteur de carte, qui n'est valable que pour une seule transaction de transmission à bande magnétique.

19. Dispositif MST selon la revendication 16, comprenant en outre :
un dispositif de commande, le dispositif de commande étant conçu pour :
recevoir une clé fournie par un émetteur de carte ou un autre tiers, et
crypter les informations de la carte de paiement à l'aide de la clé avant l'émission des impulsions magnétiques correspondant aux informations de la carte de paiement.

20. Système pour un émetteur de données de bande magnétique de champ proche en bande de base comprenant :
un téléphone mobile (110) comprenant une application de portefeuille de paiement (102) et conçu pour transmettre un flux d'impulsions comprenant des données de bande magnétique d'une carte de paiement présélectionnée ; et
un dispositif de transmission à bande magnétique (MST) (120) selon l'une quelconque des revendications 1 à 12 ou 16 à 19, le dispositif MST (120) étant conçu pour recevoir le flux d'impulsions du téléphone mobile (110) ;
l'inductance (124) étant entraînée par une série d'impulsions de courant cadencées qui résultent en une série d'impulsions magnétiques qui ressemblent au champ magnétique fluctuant créé par une bande magnétique en mouvement ; et
l'activation du bouton de paiement (170) situé dans le dispositif MST (120) amenant le téléphone mobile (110) à transmettre le flux d'impulsions comprenant les données de bande magnétique de la carte de paiement présélectionnée, commençant l'émission d'impulsions magnétiques comprenant les données de bande magnétique de la carte de paiement présélectionnée.

21. Système selon la revendication 20, comprenant en outre un bouton de paiement (104) situé dans le téléphone mobile (110), le bouton de paiement (104) situé dans le téléphone mobile étant programmé pour être associé à la carte de paiement présélectionnée et l'activation du bouton de paiement (104) situé dans le téléphone mobile déclenchant l'émission des impulsions magnétiques.

22. Système selon la revendication 20 ou 21, le téléphone mobile (110) étant conçu pour émettre une notification selon laquelle le bouton de paiement (170) situé dans le dispositif MST (120) a été activé.

23. Système selon l'une quelconque des revendications 20 à 22, le bouton de paiement (170) situé dans le dispositif MST (120) étant conçu pour être activé à distance via une connexion sans fil.

24. Dispositif MST selon l'une quelconque des revendications 1 à 12 ou 16 à 19, comprenant en outre une formeuse d'ondes (121) qui reçoit le flux d'impulsions du téléphone mobile, et forme le flux d'impulsions pour délivrer des impulsions formées au circuit d'attaque (122) en contrôlant un temps de montée d'impulsions (82) compris entre 10 et 60 microsecondes.

25. Dispositif MST selon la revendication 24, la formeuse d'ondes (121) formant en outre le flux d'impulsions reçu pour ajouter une composante DC (81) aux impulsions formées.

26. Dispositif MST selon l'une quelconque des revendications 1 à 12, 16 à 19, 24 ou 25, comprenant en outre une tête de lecture magnétique (142) comprenant une inductance de tête de lecture magnétique et l'inductance (124) du dispositif MST (120) étant conçue pour former un transformateur à couplage lâche avec l'inductance de tête de lecture magnétique à une distance supérieure à 12,7 mm (0,5 pouce) en ayant plus de vingt tours (125) et une résistance d'enroulement non supérieure à trois ohms.

27. Dispositif MST selon l'une quelconque des revendications 1 à 12, 16 à 19 ou 24 à 26, le circuit d'attaque (122) comprenant un circuit d'attaque bipolaire pour générer des impulsions de courant bipolaire avec un courant de crête dépassant 1 Ampère, et contenant une composante DC qui est supérieure à 40 % du courant de crête, et
l'inductance (124) du dispositif MST (120) comprenant un noyau de fer ou de ferrite et ledit noyau étant conçu pour ne pas saturer en réponse aux impulsions de courant bipolaire circulant à travers l'inductance.

28. Dispositif MST selon l'une quelconque des revendications 1 à 12, 16 à 19 ou 24 à 27,
l'inductance (124) comprenant un ou plusieurs enroulements (125), et ledit au mons un enroulement étant conçu pour générer des lignes de flux magnétique qui sont réparties sur une surface comprise entre 600 et 1 700 mm².
